# EUROPEAN PATENT APPLICATION

(11) **EP 2 234 332 A1**
(43) Date of publication of application: **29.09.2010**
(21) Application number: 09707023.9
(22) Date of filing: 12.01.2009
(51) Int. Cl.: H04L 12/26

(54) **METHOD, DEVICE AND SYSTEM FOR DIAGNOSING WHETHER NODES ARE ABNORMAL OR NOT IN P2P NETWORK**

(30) Priority: 29.01.2008 CN 200810057085
(71) Applicant: Huawei Technologies Co., Ltd., Longgang District, Shenzhen Guangdong 518129 (CN)
(72) Inventor: JIANG, Haifeng c/o Huawei Technologies Co.Ltd., Int.Prop.Dept., 518129 Shenzhen (CN); ZHENG, Hewen c/o Huawei Technologies Co.Ltd., Int.Prop.Dept., 518129 Shenzhen (CN); LI, Feng c/o Huawei Technologies Co.Ltd., Int.Prop.Dept., 518129 Shenzhen (CN)
(74) Representative: Kreuz, Georg Maria
(86) International application number: PCT/CN2009/070105
(87) International publication number: WO 2009/094919

(57) **Abstract**

In the field of communications, a method, device and system for diagnosing whether nodes are abnormal are provided. The method includes: sending a diagnostic message with an identifier of a message to be detected; determining whether an acknowledgement message sent from a node corresponding to the diagnostic message is received; and if the acknowledgement message is received, determining that the node is a normal node; otherwise, determining that the node is an abnormal node. A device for diagnosing whether nodes are abnormal, an intermediate node device and a system for diagnosing whether nodes are abnormal are further provided. The method, device and system have the advantage of diagnosing whether a node is abnormal and whether a node is an abnormal node.

## Description

The application claims the benefit of priority to China Patent Application No. 200810057085.1, filed on January 29, 2008, and entitled "MEHTOD, DEVICE AND SYSTEM FOR DIAGNOSING WHETHER NODES ARE ABNORMAL IN P2P NETWORK", which is incorporated herein by reference in its entirety.

### FIELD OF THE TECHNOLOGY

The present invention relates to the filed of network communication, and more particularly to a method, device and system for diagnosing whether nodes are abnormal in a peer-to-peer (P2P) network.

### BACKGROUND OF THE INVENTION

A peer-to-peer (P2P) network is a distributed network, and participants of the P2P network share a part of their own hardware resources, such as processing capability, storage capacity, network connection capability, and printer. These shared resources need to be provided with services and contents by the network, and can be accessed directly by other peers without using an intermediate entity. The peers in P2P are not only the providers of resources, but also gainers of resources. P2P breaks the traditional Client/Server (C/S) mode; each node in the network is equivalent, and each node not only acts as a server providing services for other nodes, but also enjoys services provided by other nodes. A P2P system includes a structured P2P system, an unstructured P2P system and a loosely structured P2P system.

The structured P2P system is characterized in that each node has a logical address with a fixed length, and all the nodes are formed into a logical overlay network by using the logical addresses and in accordance with a distributed Hash table (DHT) algorithm rule. In the structured P2P network, according to the DHT algorithm rule, each node needs to be responsible for storing a segment of a resource index table, and there is a unique mapping relationship between the logical address of the node itself and the segment of the resource index table according to the DHT algorithm rule; when searching for resources, a lookup message is also forwarded to a node storing a corresponding resource index in a manner of gradually approaching hop by hop in the P2P network according to the DHT algorithm rule. The forwarding manner of gradually approaching hop by hop is as shown in the following. It is assumed that A1 is an abnormal node, A2 is another abnormal node, S is an initiating node, D is a destination node, and M1 and M2 are normal nodes in an ordinary path. Assuming that S has a request, the normal path of the request is S → M1 → A1 → M2 → D. Here, M1, A1, M2, and D are called downstream nodes of the initiating node S. Since A1 is an abnormal node, A1 may, after receiving the request forwarded from M1, discard the request, or modify the request or send the request to other abnormal nodes such as the other abnormal node A2 rather than M2.

In the implementation of the present invention, the inventors found that the method described in the prior art has the following problems.

In the prior art, the presence of an abnormal node leads to loss of the message or request passing through the abnormal node, which affects the forwarding success ratio of messages or requests in the P2P system. If it can be known that the node is an abnormal node, the quantity of messages or requests passing through the abnormal node can be limited. However, in the prior art, there is no method for diagnosing whether nodes are abnormal, so it cannot be known whether a node is an abnormal node.

### SUMMARY OF THE INVENTION

In view of the above problems in the prior art, embodiments of the present invention are directed to a method, device and system for diagnosing whether nodes are abnormal in a P2P network, which can know whether a node is an abnormal node, thereby limiting the quantity of messages or requests passing through the abnormal node.

An embodiment of the present invention provides a method for diagnosing whether nodes are abnormal in a P2P network, and the method includes the following steps.

A diagnostic message with an identifier of a message to be detected is sent;

If a response message sent from a node corresponding to the diagnostic message is received, it is determined that the node is a normal node; if a response message sent from a node corresponding to the diagnostic message is not received, it is determined that the node is an abnormal node. The response message includes an acknowledgement message of a downstream node.

Another embodiment of the present invention provides a device for diagnosing whether nodes are abnormal in a P2P network, the device includes a sending unit, a receiving unit, and a determining unit.

The sending unit is configured to send a diagnostic message with an identifier of a message to be detected.

The receiving unit is configured to receive a response message sent from a node corresponding to the diagnostic message. The response message includes an acknowledgement message of a downstream node.

The determining unit is configured to determine whether the receiving unit receives the acknowledgement message, and if the acknowledgement message is received, determine that the node is a normal node; if the acknowledgement message is not received, determine that the node is an abnormal node.

Another embodiment of the present invention provides an intermediate node device. The intermediate node device includes a receiving unit and a sending unit.

The receiving unit is configured to receive a diagnostic message with an identifier of a message to be detected, and receive information sent from other nodes and an acknowledgement message and information of a downstream node sent from the downstream node.

The sending unit is configured to return an acknowledgement message and information of the intermediate node after the receiving unit receives the information sent from other nodes, and forward the information sent from the other nodes to the downstream node of the intermediate node, and send an response message corresponding to the diagnostic message after the receiving unit receives the diagnostic message. The response message includes the acknowledgement message and the information of the downstream node.

Another embodiment of the present invention provides a system for diagnosing whether nodes are abnormal in a P2P network. The system includes a source node, an intermediate node and a destination node.

The source node is configured to send a diagnostic message with an identifier of a message to be detected and receive a response message sent from the intermediate node or the destination node corresponding to the diagnostic message, and determine whether the node is abnormal according to the response message.

The intermediate node is configured to receive the diagnostic message, and send a response message corresponding to the diagnostic message, in which the response message includes information of a downstream node of the node and an acknowledgement message of the downstream node; and the intermediate node is configured to receive information sent from other nodes, and return an acknowledgement message and information of the intermediate node after receiving the information sent from the other nodes, and forward the information sent from the other nodes.

It can be seen from the technical solutions provided above, in the technical solutions of the embodiments of the present invention, it is known whether a node is an abnormal node by determining whether the node is a normal node through a diagnostic message, thereby limiting the quantity of messages or requests passing through the abnormal node, and improving the forwarding success ratio of messages or requests in the P2P system.

### BRIEF DESCRIPTION OF THE DRAWINGS

FIG. 1 is a flow chart of a method for diagnosing whether nodes are abnormal described in an embodiment of the present invention;
FIG. 2 is a flow chart of a method for diagnosing whether nodes are abnormal in a P2P network according to an embodiment of the present invention;
FIG. 3 is a structural diagram of a device for diagnosing whether nodes are abnormal in a P2P network according to an embodiment of the present invention;
FIG. 4 is a structural diagram of an intermediate node device according to an embodiment of the present invention; and
FIG. 5 is a structural diagram of a system according to an embodiment of the present invention.

### DETAILED DESCRIPTION OF THE EMBODIMENTS

An embodiment of the present invention provides a method for diagnosing whether nodes are abnormal in a P2P network.

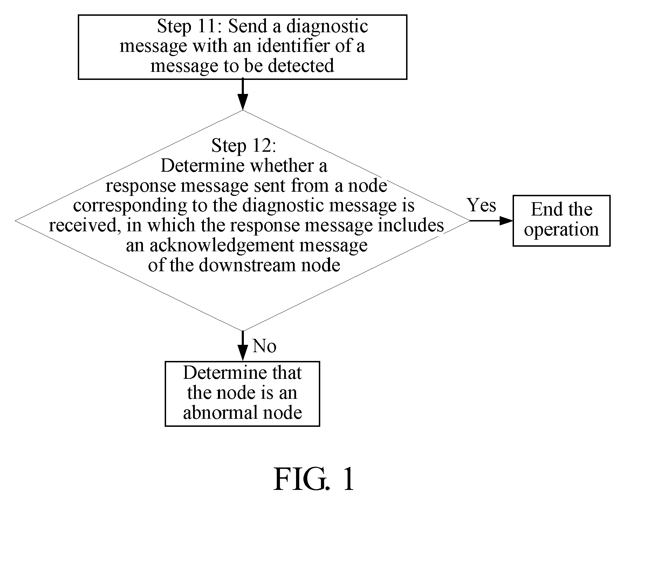

As shown in FIG. 1, the method includes the following steps.

Step 11: A diagnostic message with an identifier of a message to be detected is sent.

The identifier of the message to be detected in this step may be a message label of the message to be detected (such as a Hash value of the message to be detected), or Peer ID + Transaction ID of the message to be detected ("+" means "plus"). The embodiment of the present invention does not limit the specific form of the message identifier, as long as the message identifier enables the node to distinguish the message to be detected corresponding to the diagnostic message.

Step 12: It is determined whether a response message sent from a node corresponding to the diagnostic message is received, in which the response message includes an acknowledgement message of a downstream node; and if the response message including an acknowledgement message of a downstream node is received, it is determined that the node is a normal node; if the response message including an acknowledgement message of a downstream node is not received, it is determined that the node is an abnormal node.

Optionally, the response message may further include information of the downstream node of the node.

In this step, the downstream node of the node is a next node in a transport path of the node.

Step 12 may be accomplished by the following method: after receiving information forwarded by a previous node, the node returns an acknowledgement message carrying a signature of the node and information of the node, forwards the received information, and receives and stores the acknowledgement message and information of the downstream node sent from the downstream node after forwarding the information; and after receiving the diagnostic message with the identifier of the message to be detected, the node loads the acknowledgement message corresponding to the diagnostic message and the information of the downstream node into the response message, and sends the response message. The received information may be a packet.

Before Step 11 is finished, the method for diagnosing whether nodes are abnormal in a P2P network may further include the following step.

It is determined whether a reply message sent from a destination node is received, and if the reply message sent from the destination node is not received, Step 11 is performed; if the reply message sent from the destination node is received, the operation is ended.

The case where the reply message sent from the destination node is not received includes the following cases:
Case A: The intermediate node times out in the process of forwarding the packet information.
Case B: The intermediate node receives an acknowledgement message sent from a downstream node of the intermediate node, but the acknowledgement message is erroneous.
Case C: The intermediate message deletes or maliciously modifies the forwarded information.

The cases A to C illustrate general cases where the reply message sent from the destination node is not received, but the embodiment of the present invention does not limit the specific cases where the reply message sent from the destination node is not received, and the diagnostic message may be sent directly as long as the reply message sent from the destination node is not received.

The method for diagnosing whether nodes are abnormal in a P2P network may be implemented by a source node, or implemented by a managing node.

After Step 12 is finished, the method for diagnosing whether nodes are abnormal in a P2P network may further include: sending information of the abnormal node to other nodes. This step may be implemented by a source node or a managing node, and the other nodes in this step are the nodes other than the abnormal node. By sending the information of the abnormal node to other nodes, the other nodes can control the quantity of messages or requests sent to the abnormal node, thereby reducing the loss ratio of messages or requests.

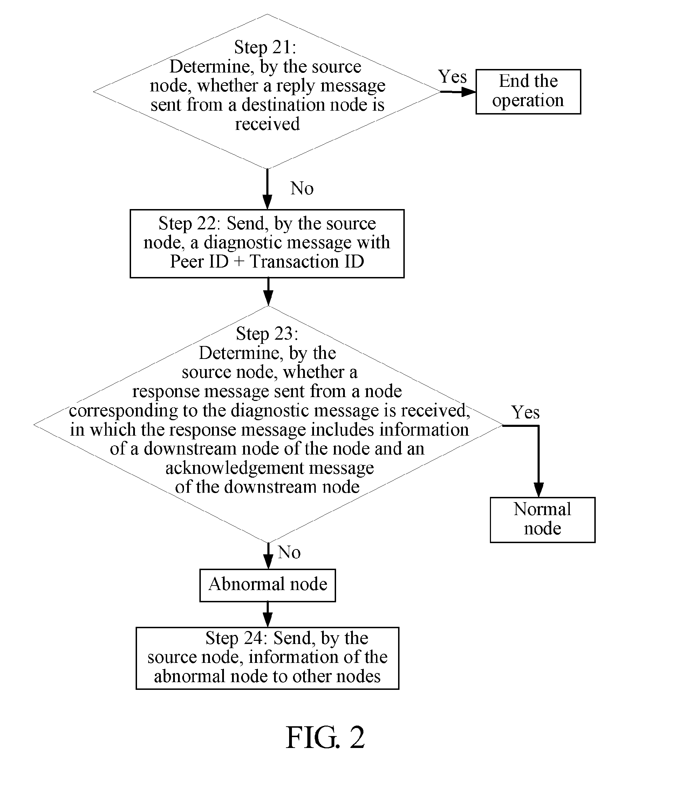

In order to better describe the method of the present invention, the embodiment of the present invention is illustrated with reference to FIG. 2.

The embodiment of the present invention provides a method for diagnosing whether nodes are abnormal. In this embodiment, the method for diagnosing whether nodes are abnormal in a P2P network is implemented by a source node, and the diagnostic message with the identifier of the message to be detected is a diagnostic message with Peer ID + Transaction ID. As shown in FIG. 2, the method for diagnosing whether nodes are abnormal in a P2P network includes the following steps.

Step 21: The source node determines whether a reply message sent from a destination node is received; if the reply message is not received, Step 22 is performed; if the reply message is received, the operation is ended.

The case where the reply message is not received in this step has been described above, so the details will not be described herein again. This step may be implemented by the following method: A period is set at the source node, and if the reply message sent from the destination node is not received within the period, it is determined that the reply message is not received; alternatively, a period may also be set at an intermediate node, such that if the intermediate node fails to forward the information, the intermediate node sends a forwarding failure message to the source node, and after receiving the message, the source node determines that the reply message is not received.

Step 22: The source node sends a diagnostic message with Peer ID + Transaction ID.

The source node sends the diagnostic message to nodes one by one, or the source node sends the diagnostic message to all the nodes at the same time.

Step 23: The source node determines whether a response message sent from a node corresponding to the diagnostic message is received, in which the response message includes information of a downstream node of the node and an acknowledgement message of the downstream node; if the response message including information of a downstream node of the node and an acknowledgement message of the downstream node is received, the source node determines that the node is a normal node; if the response message including information of a downstream node of the node and an acknowledgement message of the downstream node is not received, the source node determines that the node is an abnormal node. When the source node determines that the node is an abnormal node, Step 24 may be further performed.

The method for determining whether the response message sent from the node corresponding to the diagnostic message is received in this step may adopt the similar method for determining whether the reply message sent from the destination node is received in Step 21.

Step 24: The source node sends information of the abnormal node to other nodes.

The method of the embodiments of the present invention determines whether a node is an abnormal node through a diagnostic message.

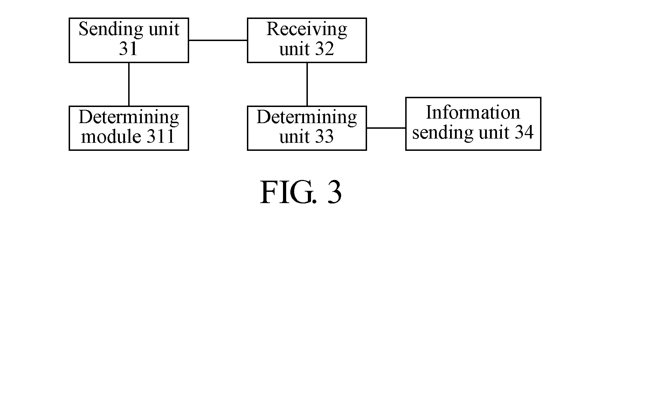

An embodiment of the present invention further provides a device for diagnosing whether nodes are abnormal in a P2P network. As shown in FIG. 3, the device includes: a sending unit 31, a receiving unit 32 and a determining unit 33. Wherein the sending unit 31 is configured to send a diagnostic message with an identifier of a message to be detected; the receiving unit 32 is configured to receive a response message sent from a node corresponding to the diagnostic message, in which the response message includes an acknowledgement message of a downstream node; the determining unit 33 is configured to determine whether the receiving unit 32 receives the response message including an acknowledgement message of a downstream node, and if the response message including an acknowledgement message of a downstream node is received, determine that the node is a normal node; if the response message including an acknowledgement message of a downstream node is not received, determine that the node is an abnormal node. The device for diagnosing whether nodes are abnormal may be a source node device or a managing node device.

Optionally, the response message may further include information of the downstream node of the node.

The device may further include a determining module 311. The determining module 311 is configured to determine whether a reply message sent from a destination node is received; and the sending unit 31 is further configured to send the diagnostic message if the determining module determines that the reply message sent from the destination node is not received.

The device may further include an information sending unit 34. The information sending unit 34 is configured to send information of the abnormal node to other nodes.

The device of the present invention determines whether a node is an abnormal node through a diagnostic message.

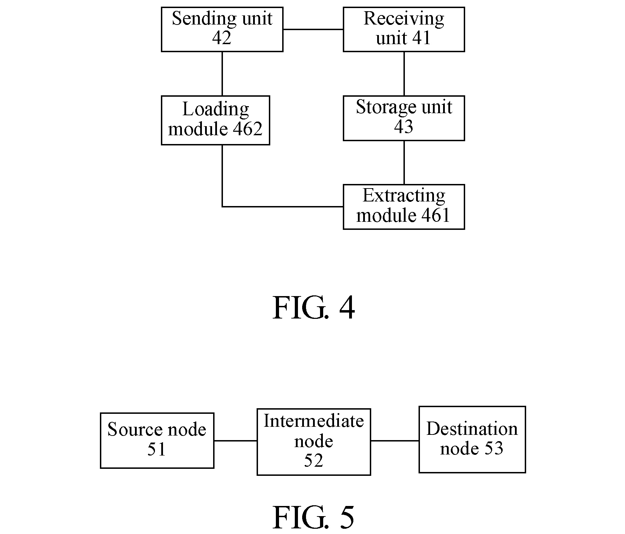

An embodiment of the present invention provides an intermediate node device. As shown in FIG. 4, the intermediate node device of the embodiment of the present invention bases on an intermediate node of the prior art and further includes: a receiving unit 41 and a sending unit 42. Wherein the receiving unit 41 is configured to receive a diagnostic message with an identifier of a message to be detected, and receive information sent from other nodes and an acknowledgement message and information of a downstream node sent from the downstream node. The sending unit 42, configured to return an acknowledgement message and information of the intermediate node after the receiving unit receives the information sent from other nodes; and forward the information sent from the other nodes to the downstream node of the intermediate node; and send an response message corresponding to the diagnostic message after the receiving unit receives the diagnostic message, in which the response message includes the acknowledgement message and the information of the downstream node.

The intermediate node device of the embodiment of the present invention may further include a storage unit 43. The storage unit 43 is configured to store the acknowledgement message and the information of the downstream node received by the receiving unit, where the acknowledgement message and the information of the downstream node are sent from the downstream node.

The intermediate node device of the embodiment of the present invention may further include an extracting module 461 and a loading module 462. The extracting module 461 is configured to extract the acknowledgement message and the information of the downstream node sent from the downstream node, the acknowledgement message and the information of the downstream node are stored by the storage unit; the loading module 462 is configured to load the acknowledgement message and the information of the downstream node sent from the downstream node into the response message, and send the response message to the sending unit; and the sending unit 42 sends the response message upon receiving the response message.

After receiving a diagnostic message, the intermediate node device of the embodiment of the present invention sends a response message corresponding to the diagnostic message, so as to support the method according to the embodiment of the present invention to determine whether a node is an abnormal node.

In a specific implementation, the present invention further provides a system for diagnosing whether nodes are abnormal in a P2P network. As shown in FIG. 5, the system includes a source node 51, an intermediate node 52 and a destination node 53.

The source node 51 is configured to send a diagnostic message with an identifier of a message to be detected; receive a response message sent from the intermediate node or the destination node corresponding to the diagnostic message, and determine whether the node is abnormal according to the response message.

The intermediate node 52 is configured to receive the diagnostic message, and send a response message corresponding to the diagnostic message, in which the response message includes information of a downstream node of the node and an acknowledgement message of the downstream node; and the intermediate node is configured to receive information sent from other nodes, and return an acknowledgement message and information of the intermediate node after receiving the information sent from the other nodes, and forward the information sent from the other nodes.

The determining whether the node is abnormal according to the response message in the system may include: if the response message including information of a downstream node of the node and an acknowledgement message of the downstream node is received, determining that the node is a normal node; if the response message including information of a downstream node of the node and an acknowledgement message of the downstream node is not received, determining that the node is an abnormal node.

The system of the embodiment of the present invention determines whether a node is an abnormal node through a diagnostic message.

It is understandable to those skilled in the art that the accompanying drawings are for illustrating the preferred embodiments only, and the modules or processes in the accompanying drawings may be not mandatory.

Person having ordinary skill in the art may understand that all or part of the steps of the method according to the embodiments of the present invention may be implemented by a program instructing relevant hardware. The program may be stored in a computer readable storage medium. When the program runs, one of or a combination of the steps according to the embodiments of the method is performed.

In addition, each functional unit in each embodiment of the present invention may be integrated in one processing module, or each unit separately physically exists, or two or more units are integrated in one module. The integrated module may be embodied in the form of hardware or software. If the integrated module is embodied in the form of software and is sold or used as a separate product, the integrated module may be stored in a computer readable storage medium.

The storage medium may be a read-only memory (ROM), a magnetic disk, or a compact disk read-only memory (CD-ROM).

Based on the above, the technical solutions provided by the embodiments of the present invention have the advantage of determining whether a node is an abnormal node.

The above descriptions are merely preferred embodiments of the present invention, but not intended to limit the scope of the present invention. Any modification, equivalent replacement, or improvement made without departing from the spirit and principle of the present invention should fall within the scope of the present invention. Therefore, the protection scope of the present invention is subject to the appended claims.

## Claims

1. A method for diagnosing whether nodes are abnormal in a peer-to-peer (P2P) network, comprising:
sending a diagnostic message with an identifier of a message to be detected; and
if a response message sent from a node corresponding to the diagnostic message is received, determining that the node is a normal node; if a response message sent from a node corresponding to the diagnostic message is not received, determining that the node is an abnormal node; wherein the response message comprises an acknowledgement message of a downstream node.

2. The method according to claim 1, wherein the sending the diagnostic message with the identifier of the message to be detected, comprises:
sending the diagnostic message with the identifier of the message to be detected if a reply message sent from a destination node is not received.

3. The method according to claim 1, wherein after the determining that the node is the abnormal node, the method further comprises:
sending information of the abnormal node to other nodes.

4. The method according to claim 1, wherein the identifier of the message to be detected comprises:
a message label of the message to be detected;
or Peer ID + Transaction ID of the message to be detected.

5. The method according to claim 1, wherein the response message further comprises information of the downstream node of the node.

6. A device for diagnosing whether nodes are abnormal in a peer-to-peer (P2P) network, comprising:
a sending unit, configured to send a diagnostic message with an identifier of a message to be detected;
a receiving unit, configured to receive a response message sent from a node corresponding to the diagnostic message, wherein the response message comprises an acknowledgement message of a downstream node; and
a determining unit, configured to determine whether the receiving unit receives the acknowledgement message, and if the acknowledgement message is received, determine that the node is a normal node; if the acknowledgement message is not received, determine that the node is an abnormal node.

7. The device according to claim 6, further comprising:
a determining module, configured to determine whether a reply message sent from a destination node is received, and send a determination result to the sending unit;
wherein the sending unit sends the diagnostic message if the determining module determines that the reply message sent from the destination node is not received.

8. The device according to claim 7, further comprising:
an information sending unit, configured to send information of the abnormal node to other nodes.

9. An intermediate node device, comprising:
a receiving unit, configured to receive a diagnostic message with an identifier of a message to be detected, receive information sent from other nodes, and receive an acknowledgement message and information of a downstream node sent from the downstream node; and
a sending unit, configured to return an acknowledgement message and information of the intermediate node after the receiving unit receives the information sent from other nodes, and forward the information sent from the other nodes to the downstream node of the intermediate node, and send a response message corresponding to the diagnostic message after the receiving unit receives the diagnostic message, wherein the response message comprises the acknowledgement message and the information of the downstream node.

10. The device according to claim 9, further comprising:
a storage unit, configured to store the acknowledgement message and the information of the downstream node are received by the receiving unit, the acknowledgement message and the information of the downstream node are sent from the downstream node.

11. The device according to claim 10, further comprising:
an extracting module, configured to extract the acknowledgement message and the information of the downstream node are stored by the storage unit, the acknowledgement message and the information of the downstream node are sent from the downstream node; and
a loading module, configured to load the acknowledgement message and the information of the downstream node sent from the downstream node into the response message, and send the response message to the sending unit;
wherein the sending unit sends the response message upon receiving the response message.

12. A system for diagnosing whether nodes are abnormal in a peer-to-peer (P2P) network, comprising a source node, an intermediate node and a destination node, wherein
the source node is configured to: send a diagnostic message with an identifier of a message to be detected, and receive a response message sent from the intermediate node or the destination node corresponding to the diagnostic message, and determine whether the node is abnormal according to the response message; and
the intermediate node is configured to receive the diagnostic message, and send a response message corresponding to the diagnostic message, wherein the response message comprises information of a downstream node of the node and an acknowledgement message of the downstream node; and the intermediate node is configured to receive information sent from other nodes, and return an acknowledgement message and information of the intermediate node after receiving the information sent from the other nodes, and forward the information sent from the other nodes.

13. The system according to claim 12, wherein the determining whether the node is abnormal according to the response message comprises:
if the response message is received, determining that the node is a normal node; if the response message is not received, determining that the node is an abnormal node.
